Europäisches Patentamt

European Patent Office

Office européen des brevets

(19)

(11) **EP 1 492 250 A1**

(12) **DEMANDE DE BREVET EUROPEEN**

(43) Date de publication:
**29.12.2004 Bulletin 2004/53**

(51) Int Cl.⁷: **H04B 7/005**

(21) Numéro de dépôt: **04013359.7**

(22) Date de dépôt: **07.06.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **27.06.2003 FR 0307795**

(71) Demandeur: **Nortel Networks Limited**
**St. Laurent, Quebec H4S 2A9 (CA)**

(72) Inventeurs:
• **Ben Rached, Nidham**
  **75017 Paris (FR)**
• **Lucidarme, Thierry**
  **78180 Montigny Le Bretonneux (FR)**

(74) Mandataire: **Ameline, Jean-Paul et al**
  **Nortel Networks S.A**
  **Intellectual Property Law Group-CT34,**
  **Parc d'activités de Magny-Chateaufort,**
  **Chateaufort**
  **F-78928 Yvelines Cedex 9 (FR)**

(54) **Procédé de contrôle de puissance relative de signaux radio émis en mode macrodiversité, et contrôleur de réseau radio pour la mise en oeuvre du procédé**

(57) Le contrôleur de réseau radio estime des rapports d'atténuation respectifs de signaux radio reçus par un terminal depuis des émetteurs d'un ensemble actif. Il commande certains au moins des émetteurs de l'ensemble actif pour qu'ils émettent à destination du terminal avec des puissances respectives telles que l'écart $p_i - p_j$ entre les puissances d'émission respectives $p_i$ et $p_j$ de deux émetteurs i et j soit sensiblement proportionnel à $\frac{1}{L_j} - \frac{1}{L_i}$, où $L_i$ et $L_j$ désignent les rapports d'atténuation respectivement estimés pour les émetteurs i et j.

FIG.1.

**Description**

La présente invention concerne les techniques de macrodiversité utilisées dans les réseaux cellulaires de radiocommunication. Elle trouve notamment application dans les réseaux cellulaires à étalement de spectre utilisant des méthodes d'accès multiple à répartition par codes (CDMA, "Code Division Multiple Access"), par exemple dans les réseaux de troisième génération du type UMTS ("Universal Mobile Telecommunication System").

Les techniques d'étalement de spectre ont pour particularité de permettre la prise en compte de trajets de propagation multiples entre l'émetteur et le récepteur, ce qui procure un gain en diversité de réception appréciable.

Un récepteur classiquement utilisé pour cela est le récepteur en râteau, ou "rake", qui comporte un certain nombre de "doigts" fonctionnant en parallèle pour estimer les symboles numériques transmis. Le gain en diversité de réception résulte de la combinaison des estimations obtenues dans les différents doigts du récepteur.

Dans un système CDMA à étalement de spectre, les symboles transmis, généralement binaires ($\pm$ 1) ou quaternaires ($\pm$ 1 $\pm$ j), sont multipliés par des codes d'étalement composés d'échantillons, appelés "chips", dont la cadence est supérieure à celle des symboles, dans un rapport appelé facteur d'étalement. Des codes d'étalement orthogonaux ou quasi-orthogonaux sont alloués à différents canaux partageant la même fréquence porteuse, afin de permettre à chaque récepteur de détecter la séquence de symboles qui lui est destinée, en multipliant le signal reçu par le code d'étalement correspondant.

En général, dans les systèmes cellulaires, l'émetteur-récepteur fixe desservant une cellule donnée émet un signal de balise sur un canal pilote auquel est alloué un code d'étalement pilote déterminé. Ce code pilote est communiqué aux terminaux mobiles situés dans la cellule ou à proximité, au moyen d'informations système diffusées par les stations de base. Les terminaux effectuent des mesures de la puissance reçue sur les codes pilotes pertinents. Ces mesures permettent aux mobiles en veille d'identifier la meilleure cellule à utiliser s'ils ont à faire un accès aléatoire. Elles permettent aussi d'identifier en cours de communication la ou les cellules avec lesquelles les conditions de liaison radio sont les meilleures en vue d'effectuer un transfert intercellulaire de communication ("handover") en cas de nécessité.

Une particularité des systèmes CDMA à étalement de spectre est de pouvoir supporter un mode de macrodiversité. La macrodiversité consiste à prévoir qu'un terminal mobile puisse simultanément communiquer avec des émetteurs-récepteurs fixes distincts d'un ensemble actif ("active set"). Dans le sens descendant, le terminal mobile reçoit plusieurs fois la même information. Dans le sens montant, le signal radio émis par le terminal mobile est capté par les émetteurs-récepteurs fixes de l'ensemble actif pour former des estimations différentes ensuite combinées dans le réseau.

La macrodiversité procure un gain de réception qui améliore les performances du système grâce à la combinaison d'observations différentes d'une même information.

Elle permet également de réaliser des transferts intercellulaires en douceur (SHO, "soft handover"), lorsque le terminal mobile se déplace.

Dans un système CDMA tel que l'UMTS, la puissance d'émission sur l'interface radio est réglée par une procédure d'asservissement dans laquelle le récepteur renvoie à l'émetteur des commandes de contrôle de puissance (TPC) pour chercher à atteindre un objectif en termes de conditions de réception. Ces commandes TPC consistent en des bits émis à cadence assez élevée et dont la valeur indique si la puissance d'émission doit être augmentée ou diminuée.

Dans le cas d'une communication en macrodiversité, les différents émetteurs-récepteurs fixes de l'ensemble actif reçoivent du terminal mobile des bits TPC identiques. Des termes correctifs respectifs peuvent être pris en compte par ces émetteurs-récepteurs fixes en vue d'équilibrer les puissances émises. Pour une même puissance totale émise relativement à un canal logique, c'est-à-dire pour un niveau d'interférence donné, cet équilibrage des puissances émises n'est pas optimal au sens du taux d'erreur observé dans les symboles transmis.

Un but de la présente invention est d'apporter à cet égard une solution plus satisfaisante.

L'invention propose ainsi un procédé de contrôle de puissance relative de signaux radio émis en mode macrodiversité depuis plusieurs émetteurs radio d'un ensemble actif vers un terminal radio, comprenant les étapes suivantes:

- estimer des rapports d'atténuation respectifs de signaux radio reçus par le terminal depuis les émetteurs de l'ensemble actif; et
- commander certains au moins des émetteurs de l'ensemble actif pour qu'ils émettent à destination du terminal avec des puissances respectives telles que l'écart $p_i - p_j$ entre les puissances d'émission respectives $p_i$ et $p_j$ de deux émetteurs i et j soit sensiblement proportionnel à $\frac{1}{L_j} - \frac{1}{L_i}$, où $L_i$ et $L_j$ désignent les rapports d'atténuation respectivement estimés pour les émetteurs i et j.

Cette façon de répartir la puissance à émettre vers le terminal permet avantageusement de tenir compte des atténuations différentes qui se produisent sur les différents liens radio. Il en résulte de meilleures conditions globales de réception, et donc un meilleur usage des ressources du réseau, que dans le cas où les puissances sont systématiquement équilibrées.

En particulier, lorsque conformément à un mode de réalisation préféré, les émetteurs i et j sont commandés de façon que l'écart $p_i - p_j$ entre leurs puissances d'émission respectives soit sensiblement égal à

$$N0.\left(\frac{1}{L_j} - \frac{1}{L_i}\right),$$

où N0 est une estimation de la puissance du bruit subi par le terminal radio en réception, on peut montrer que le procédé conduit à un taux d'erreur binaire (BER, "bit error rate") optimal.

L'invention propose également un contrôleur de réseau radio adapté à la mise en oeuvre du procédé ci-dessus. Un contrôleur selon l'invention, pour une infrastructure de réseau radio cellulaire, comprend des moyens de communication avec des émetteurs radio fixes desservant des cellules respectives et avec au moins un terminal radio, et des moyens de contrôle de ressources radio affectées à une communication entre le terminal et plusieurs des émetteurs radio appartenant à un ensemble actif. Les moyens de contrôle de ressources radio comprennent des moyens pour estimer des rapports d'atténuation respectifs de signaux radio reçus par le terminal depuis les émetteurs de l'ensemble actif d'après des mesures relatives à des conditions de réception desdits signaux radio par le terminal, et des moyens pour commander certains au moins des émetteurs de l'ensemble actif pour qu'ils émettent à destination du terminal avec des puissances respectives telles que l'écart $p_i - p_j$ entre les puissances d'émission respectives $p_i$ et $p_j$ de deux émetteurs i et j soit sensiblement proportionnel à $\frac{1}{L_j} - \frac{1}{L_i}$, où $L_i$ et $L_j$ désignent les rapports d'atténuation respectivement estimés pour les émetteurs i et j.

D'autres particularités et avantages de la présente invention apparaîtront dans la description ci-après d'exemples de réalisation non limitatifs, en référence aux dessins annexés, dans lesquels :

- la figure 1 est un schéma d'un réseau UMTS ;
- la figure 2 est un diagramme montrant l'organisation en couches de protocoles de communication employés sur l'interface radio du réseau UMTS;
- la figure 3 est un schéma synoptique de la partie émission d'un émetteur-récepteur radio d'une station de base UMTS ;
- la figure 4 est un schéma synoptique de la partie émission d'un terminal mobile UMTS ;
- la figure 5 est un schéma synoptique d'un récepteur d'une station UMTS ; et
- la figure 6 est un schéma synoptique d'un contrôleur de réseau radio UMTS.

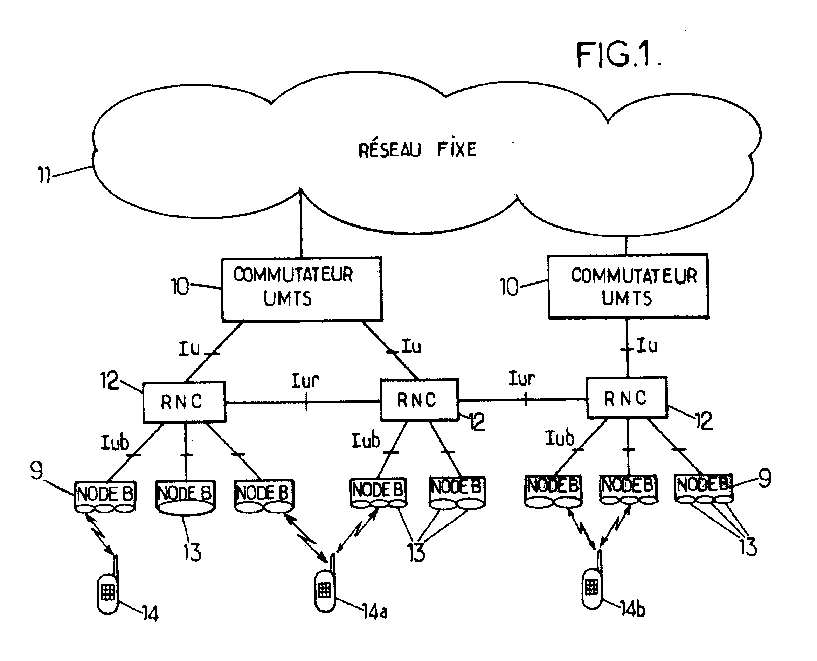

L'invention est décrite ci-après dans son application à un réseau UMTS, dont la figure 1 montre l'architecture.

Les commutateurs du service mobile 10, appartenant un coeur de réseau (CN, "Core Network"), sont reliés d'une part à un ou plusieurs réseaux fixes 11 et d'autre part, au moyen d'une interface dite *lu,* à des équipements de contrôle 12, ou RNC ("Radio Network Controller"). Chaque RNC 12 est relié à une ou plusieurs stations de base 9 au moyen d'une interface dite *lub.* Les stations de base 9, réparties sur le territoire de couverture du réseau, sont capables de communiquer par radio avec les terminaux mobiles 14, 14a, 14b appelés UE ("User Equipment"). Les stations de base 9, aussi appelées « node B », peuvent desservir chacune une ou plusieurs cellules au moyen d'émetteurs-récepteurs respectifs 13. Certains RNC 12 peuvent en outre communiquer entre eux au moyen d'une interface dite *lur.* Les RNC et les stations de base forment un réseau d'accès appelé UTRAN ("UMTS Terrestrial Radio Access Network").

L'UTRAN comporte des éléments des couches 1 et 2 du modèle ISO en vue de fournir les liaisons requises sur l'interface radio (appelée *Uu*), et un étage 15A de contrôle des ressources radio (RRC, "Radio Resource Control") appartenant à la couche 3, ainsi qu'il est décrit dans la spécification technique 3G TS 25.301, "Radio Interface Protocol", version 3.4.0 publiée en mars 2000 par le 3GPP (3rd Generation Partnership Project). Vu des couches supérieures, l'UTRAN agit simplement comme relais entre l'UE et le CN.

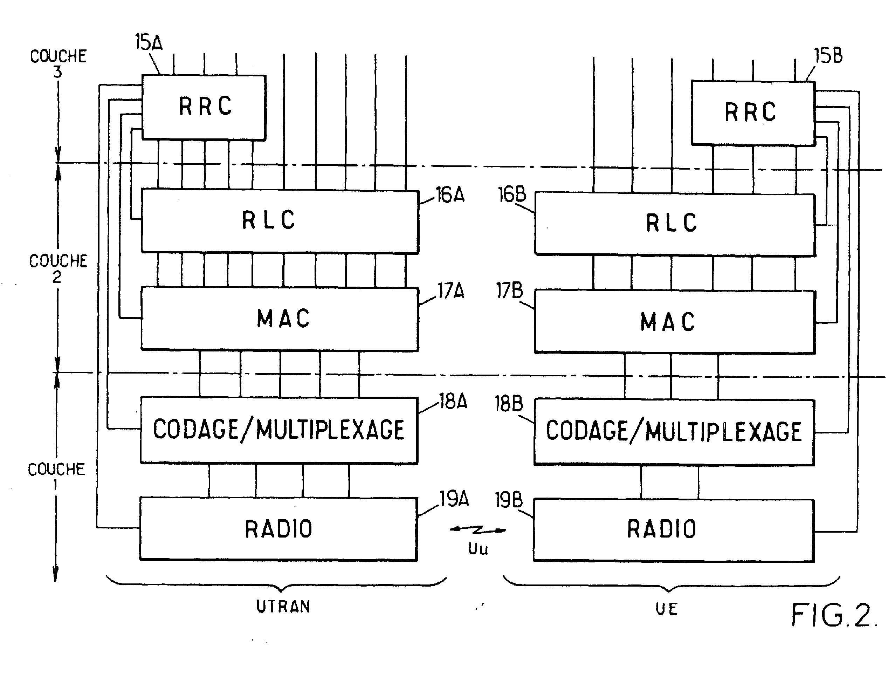

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, "Radio Link Control") et un étage 17A, 17B de contrôle d'accès au médium (MAC, "Medium Access Control"). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, "UTRAN Overall Description", version 3.1.0 publiée en janvier 2000 par le 3GPP). Les étages RRC, RLC et MAC se trouvent dans le RNC 12. La couche 1 se trouve par exemple dans le node B 9. Une partie de cette couche peut toutefois se trouver dans le RNC 12.

Lorsque plusieurs RNC sont impliqués dans une communication avec un UE, il y a généralement un RNC de desserte appelé SRNC ("Serving RNC"), où se trouvent les modules relevant de la couche 2 (RLC et MAC), et au moins un RNC relais appelé DRNC ("Drift RNC") auquel est relié une station de base 9 avec laquelle l'UE est en liaison radio. Des protocoles appropriés assurent les échanges entre ces RNC sur l'interface *Iur*, par exemple ATM ("Asynchronous Transfer Mode") et AAL2 ("ATM Adaptation Layer No. 2"). Ces mêmes protocoles peuvent également être employés sur l'interface Iub pour les échanges entre un node B et son RNC.

Les couches 1 et 2 sont chacune contrôlées par la sous-couche RRC, dont les caractéristiques sont décrites dans la spécification technique TS 25.331, "RRC Protocol Specification", version 4.1.0 publiée en juin 2001 par le 3GPP. L'étage RRC 15A, 15B supervise l'interface radio. Il traite en outre des flux à transmettre à la station distante selon un "plan de contrôle", par opposition au "plan d'utilisateur" qui correspond au traitement des données d'utilisateur issues de la couche 3.

L'UMTS utilise la technique CDMA d'étalement de spectre, c'est-à-dire que les symboles transmis sont multipliés par des codes d'étalement constitués d'échantillons appelés "chips" dont la cadence (3,84 Mchip/s dans le cas de l'UMTS) est supérieure à celle des symboles transmis. Les codes d'étalement distinguent différents canaux physiques (PhCH) qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés.

Pour l'UMTS en mode FDD ("Frequency Division Duplex") sur la liaison descendante, un code de brouillage ("scrambling code") est alloué à chaque émetteur-récepteur 13 de chaque station de base 9, et différents canaux physiques utilisés par cet émetteur-récepteur sont distingués par des codes de canal ("channelization codes") mutuellement orthogonaux. L'émetteur-récepteur 13 peut aussi utiliser plusieurs codes de brouillage mutuellement orthogonaux, l'un d'entre eux étant un code de brouillage primaire. Sur la liaison montante, l'émetteur-récepteur 13 utilise le code de brouillage pour séparer les UE émetteurs, et éventuellement le code de canal pour séparer les canaux physiques issus d'un même UE. Pour chaque PhCH, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques sont organisés en trames de 10 ms qui se succèdent sur la fréquence porteuse utilisée. Chaque trame est subdivisée en 15 tranches temporelles ("timeslots") de 666 $\mu$s. Chaque tranche peut porter les contributions superposées d'un ou plusieurs canaux physiques, comprenant des canaux communs et des canaux dédiés DPCH ("Dedicated Physical Channel").

Sur la liaison descendante, l'un des canaux communs est un canal pilote appelé CPICH ("Common Pilot Channel"). Ce canal porte un signal pilote, ou signal de balise, formé à partir d'une séquence de symboles prédéterminée (voir spécification technique 3G TS 25.211, "Physical channels and mapping of transport channels onto physical channels (FDD)", version 3.3.0 publiée en juin 2000 par le 3GPP). Ce signal est émis par l'émetteur-récepteur 13 sur le code de brouillage primaire de la cellule, avec un code de canal déterminé.

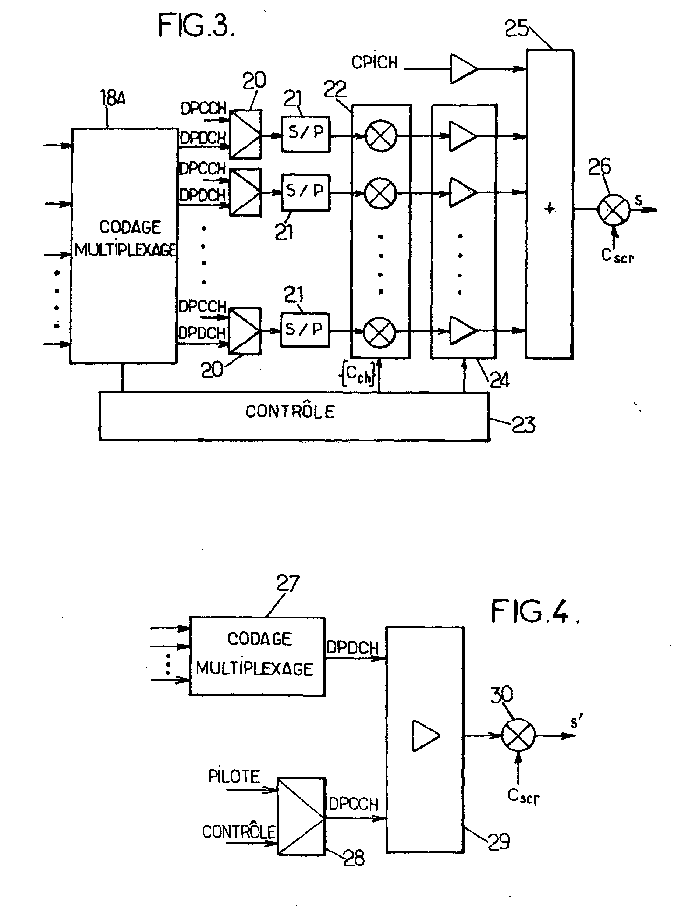

La figure 3 illustre schématiquement la partie émission d'un émetteur-récepteur fixe 13 d'une station de base UMTS, desservant une cellule au moyen d'un code de brouillage $c_{scr}$. La couche 1 peut multiplexer plusieurs canaux de transport (TrCH) issus de la sous-couche MAC sur un ou plusieurs PhCH. Le module 18A reçoit les flux de données des TrCH descendants, issus du RNC, et leur applique les opérations de codage et de multiplexage requises pour former la partie données (DPDCH) des DPCH à émettre. Ces fonctions de codage et de multiplexage sont décrites en détail dans la spécification technique 3G TS 25.212, "Multiplexing and channel coding (FDD)", version 3.3.0 publiée en juin 2000 par le 3GPP.

Cette partie données DPDCH est multiplexée dans le temps, au sein de chaque tranche temporelle de 666 ms avec une partie contrôle (DPCCH) comportant des informations de contrôle et des symboles pilotes prédéterminés, comme schématisé sur la figure 3 par les multiplexeurs 20 qui forment les flux binaires des DPCH. Sur chaque canal, un convertisseur série/parallèle 21 forme un signal numérique complexe dont la partie réelle est constituée par les bits de rang pair du flux et la partie imaginaire par les bits de rang impair. Le module 22 applique à ces signaux complexes leurs codes de canal respectifs $c_{ch}$, qui sont alloués par une unité de contrôle 23. Le module 24 pondère les signaux qui en résultent conformément aux puissances d'émission respectives des canaux physiques, déterminées par un processus de contrôle de puissance.

Les signaux complexes des différents canaux sont ensuite sommés par l'additionneur 25 avant d'être multipliés par le code de brouillage $c_{scr}$ de la cellule au moyen du module 26. L'additionneur 25 reçoit aussi la contribution du CPICH, qui n'est pas multipliée par un code de canal puisque le code de canal du CPICH est constant et égal à 1 (spécification technique 3G TS 25.213, "Spreading and modulation (FDD)", version 3.2.0 publiée en mars 2000 par le 3GPP). Le signal complexe en bande de base s délivré par le module 26 est soumis à un filtre de mise en forme et converti en analogique avant de moduler la fréquence porteuse en QPSK ("Quadrature Phase Shift Keying"), et d'être amplifié et émis par la station de base.

Les différentes ressources d'émission de l'émetteur-récepteur 13 sont allouées aux canaux par l'unité 23 sous le contrôle de l'étage RRC 15A situé dans le RNC. Les messages de contrôle correspondants sont transmis au moyen d'un protocole applicatif de commande des émetteurs-récepteurs, appelé NBAP ("Node B Application Protocol", voir spécification technique 3G TS 25.433, version 4.1.0, "UTRAN lub Interface NBAP Signalling", publiée en juin 2001 par le 3GPP).

La figure 4 illustre schématiquement la partie émission d'un UE. On suppose ici que cet UE émet sur un seul canal physique. Le module 27 assure le codage et éventuellement le multiplexage des TrCH correspondant à un canal physique. Ceci forme un signal réel (DPDCH) qui sera transmis sur une voie I. Parallèlement, des informations de contrôle ainsi que des symboles pilote sont assemblés par un module 28 pour former un signal réel (DPCCH) qui sera transmis sur une voie Q. Les signaux numériques des voies I et Q forment les parties réelle et imaginaire d'un signal complexe dont la puissance d'émission est ajustée par un module 29. Le signal résultant est modulé par le code d'étalement du canal constitué par un code de brouillage $c_{scr}$, comme représenté par le multiplieur 30. Le signal complexe en bande de base s' ainsi obtenu ensuite filtré, converti en analogique avant de moduler la fréquence porteuse en QPSK.

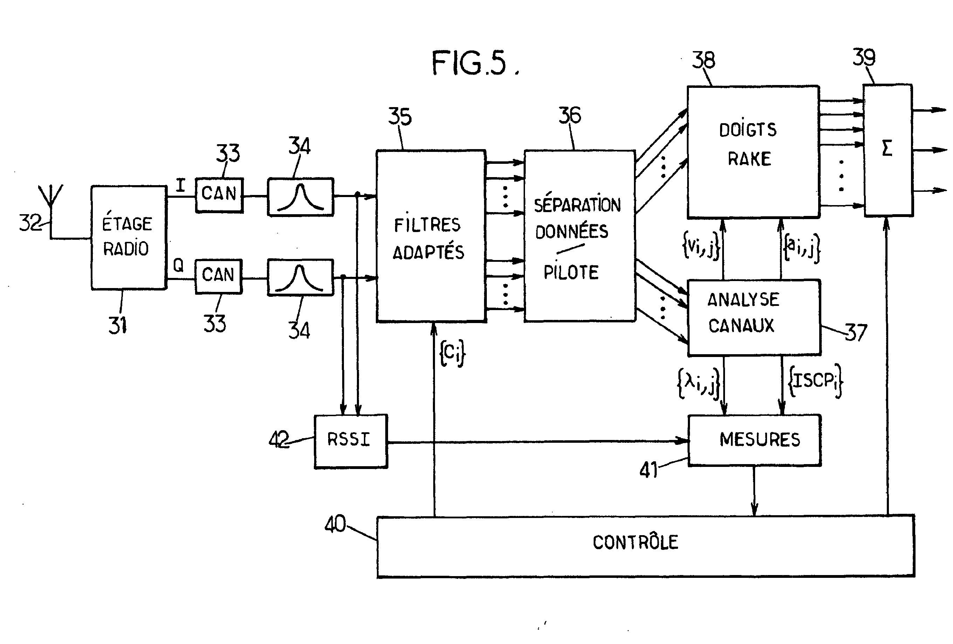

La figure 5 est un schéma synoptique d'un récepteur CDMA pouvant se trouver dans l'UE pour la liaison descendante, ou dans le node B pour la liaison montante. Ce récepteur comporte un étage radio 31 qui effectue les traitements analogiques requis sur le signal radio capté par une antenne 32. L'étage radio 31 délivre un signal analogique complexe dont les parties réelles et imaginaire sont numérisées par les convertisseurs analogiques-numérique 33 sur des voies de traitement respectives I et Q. Sur chaque voie, un filtre 34 adapté à la mise en forme des impulsions par l'émetteur produit un signal numérique à la cadence des chips des codes d'étalement.

Ces signaux numériques sont soumis à une batterie de filtres adaptés 35. Ces filtres 35 sont adaptés aux codes d'étalement $c_i$ des canaux à prendre en considération. Ces codes d'étalement $c_i$ (produits d'un code de brouillage et d'un éventuel code de canal) sont fournis aux filtres adaptés 35 par un module de contrôle 40 qui gère notamment l'allocation des ressources du récepteur. Du côté du node B, le module de contrôle 40 est supervisé par l'étage RRC 15A du RNC à travers le protocole NBAP. Du côté de l'UE, le module de contrôle 40 est supervisé par l'étage RRC 15B.

Pour N canaux physiques (codes d'étalement) pris en compte, les filtres adaptés 35 délivrent N signaux réels sur la voie I et N signaux réels sur la voie Q, qui sont fournis à un module 36 de séparation entre les données et les signaux pilotes. Pour les liaisons descendantes, la séparation consiste à extraire les portions des tranches temporelles contenant les signaux pilotes complexes émis par le node B pour les fournir au module 37 d'analyse des canaux, les données correspondantes étant adressées aux doigts 38 du récepteur rake. Dans le cas des liaisons montantes, la séparation opérée par le module 36 consiste à extraire les signaux pilotes réels de la voie Q relative à chaque canal pour les fournir au module d'analyse 37.

Pour chaque canal physique, dénoté par un indice entier i, le module d'analyse 37 identifie un certain nombre de trajets de propagation, dénotés par un indice j, sur la base de la portion du signal de sortie du filtre adapté 35 correspondant aux symboles pilotes, qui constitue un échantillonnage de la réponse impulsionnelle du canal.

Il existe différentes façons possibles de représenter les trajets de propagation pour le récepteur rake. Une méthode consiste à rechercher les maxima de la réponse impulsionnelle du canal échantillonnée en sortie du filtre adapté 35, moyennée sur une période de l'ordre de la centaine de millisecondes. Chaque trajet de propagation est alors représenté par un retard $t_{i,j}$ correspondant à l'un des maxima, d'amplitude instantanée $a_{i,j}$. Dans ce cas, le traitement effectué dans chaque doigt 38 du récepteur rake, alloué au trajet j du canal i, consiste à échantillonner le signal reçu sur le canal i avec le retard $t_{i,j}$ et à multiplier le résultat par $a_{i,j}^*$. Les trajets sélectionnés sont ceux pour lesquels les énergies de réception sont les plus grandes, l'énergie de réception suivant un trajet j d'un canal i étant égale à la moyenne de $|a_{i,j}|^2$.

Dans une autre représentation possible (voir WO01/41382), chaque trajet de propagation d'un canal i est représenté par un vecteur propre $v_{i,j}$ de la matrice d'autocorrélation du vecteur de réponse impulsionnelle fourni par le filtre adapté 35. Dans le traitement effectué dans le doigt 38 du récepteur rake, l'échantillonnage avec le retard $t_{i,j}$ est alors remplacé par le produit scalaire du vecteur de sortie du filtre adapté 35 par le vecteur propre $v_{i,j}$. Pour estimer les vecteurs propres $v_{i,j}$, le module d'analyse 37 effectue une diagonalisation de la matrice d'autocorrélation, qui fournit également les valeurs propres associées $\lambda_{i,j}$. La valeur propre $\lambda_{i,j}$, égale à l'espérance mathématique de $|a_{i,j}|^2$, représente l'énergie de réception du signal sur le trajet j du canal i.

Le module de combinaison 39 du récepteur rake reçoit les contributions des doigts 38 et, pour chaque canal i, calcule la somme des contributions respectives des trajets retenus j, indiqués par le module de contrôle 40. Le résultat est l'estimation locale des symboles d'information transmis sur le canal i.

Dans le cas d'un UE recevant des signaux descendants en mode de macrodiversité, c'est-à-dire depuis plusieurs émetteurs-récepteurs 13 utilisant des codes d'étalement différents, le module 39 peut également additionner les contributions des canaux de propagation correspondants afin d'obtenir le gain en diversité. Les estimations combinées qui en résultent sont alors soumises à l'étage de décodage et de démultiplexage (non représenté sur la figure 5).

Dans le cas d'une station de base 9 recevant sur plusieurs émetteurs-récepteurs 13 des signaux montants issus d'un même terminal mobile en mode de macrodiversité, les estimations locales délivrées par les modules de combinaison respectifs 39 de ces émetteurs-récepteurs 13 sont également combinées afin d'obtenir le gain en diversité.

Dans le cas d'une macrodiversité montante entre plusieurs stations de base 9 recevant des signaux issus d'un même terminal mobile, les estimations locales délivrées par les modules de combinaison respectifs 39 des émetteurs-récepteurs 13 sont soumises à l'étage de décodage et de démultiplexage (non représenté sur la figure 5) pour obtenir les symboles estimés du ou des TrCH concernés. Ces symboles sont transmis au SRNC par l'intermédiaire de l'interface *lub* (*lur*) dans lequel ils sont combinés afin d'obtenir le gain en diversité.

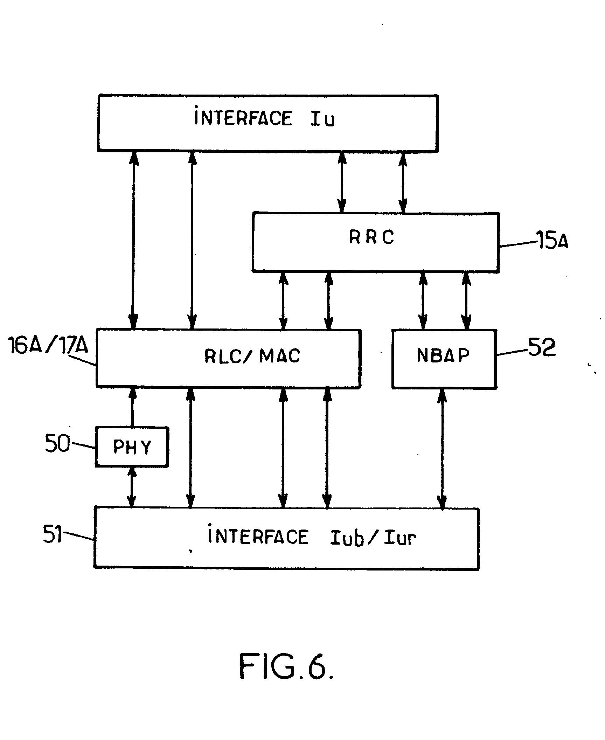

Le module de combinaison correspondant du RNC 12 est désigné par la référence 50 sur la figure 6. Ce module récupère sur l'interface *lub* et/ou *lur* 51 les symboles du TrCH issus des différentes stations de base et les fournit l'étage MAC 17A après combinaison. Dans le sens descendant, ce module 50 appartenant à la couche physique se charge de diffuser les flux des TrCH issus de l'étage MAC 17A vers les stations de base concernées.

La figure 6 illustre en outre schématiquement une instance 52 du protocole NBAP exécutée au niveau du RNC 12 pour contrôler une station de base distante. Le dialogue entre l'étage RRC 15A du RNC et celui 15B d'un UE s'effectue au moyen d'une "connexion RRC" gérée comme décrit dans la section 8.1 de la spécification technique 3G TS 25.331 précitée.

Les procédures du protocole RRC comprennent des procédures de mesure décrites dans la section 8.4 de la spécification technique 3G TS 25.331, qui servent notamment à la mise à jour de l'ensemble actif pour les UE en macrodiversité (ou SHO) ainsi qu'à l'ajustement des puissances d'émission des émetteurs-récepteurs de l'ensemble actif. Les mesures souhaitées par le RNC sont demandées aux UE dans des messages "MEASUREMENT CONTROL", dans lesquels sont également indiqués les modes de compte rendu, par exemple avec une périodicité spécifiée ou en réponse à certains événements. Les mesures spécifiées par le RNC sont alors effectuées par l'UE qui les remonte sur la connexion RRC dans des messages "MEASUREMENT REPORT" (3G TS 25.331, sections 10.2.17 et 10.2.19). Ces messages "MEASUREMENT CONTROL" et "MEASUREMENT REPORT" sont relayés de façon transparente par les émetteurs-récepteurs 13 des stations de base.

Plusieurs algorithmes, non normalisés, peuvent être utilisés par le SRNC pour déterminer les émetteurs-récepteurs 13 de l'ensemble actif.

Dans certains cas, ces algorithmes de détermination de l'ensemble actif peuvent prendre en compte des mesures montantes, réalisées par les émetteurs-récepteurs 13 des stations de base et remontées conformément aux procédures NBAP décrites dans les sections 8.3.8 à 8.3.11 de la spécification technique 3G TS 25.433 précitée. Le RNC indique au node B les mesures dont il a besoin dans un message "DEDICATED MEASUREMENT INITIATION REQUEST", et le node B les remonte dans un message de compte rendu "DEDICATED MEASUREMENT REPORT" (3G TS 25.433, sections 9.1.52 et 9.1.55).

Les modifications de l'ensemble actif sont notifiées à l'UE (module de contrôle 40 du récepteur) au moyen des procédures de mise à jour de l'ensemble actif en SHO du protocole RRC, décrites dans la section 8.3.4 de la spécification technique 3G TS 25.331 (message "ACTIVE SET UPDATE" de la section 10.2.1).

Ces modifications donnent également lieu à l'envoi de signalisation du RNC aux stations de base 9 au moyen des procédures d'établissement, d'addition, de reconfiguration et de suppression de liens radio du protocole NBAP, décrites dans la section 8 de la spécification technique 3G TS 25.433.

Les mesures prises en considération par le RNC pour contrôler les liens radio en SHO comprennent des mesures de puissance effectuées sur les signaux ou canaux pilotes, obtenues par un module de mesure 41 représenté sur la figure 5. Diverses mesures que doivent pouvoir faire les terminaux mobiles et les stations de base sont listées dans la spécification technique 3G TS 25.215, "Physical layer - Measurements (FDD)", version 3.3.0 publiée en juin 2000 par le 3GPP. Les mesures obtenues par le module 41 sont transmises au RNC par l'intermédiaire du module de contrôle 40 et de la connexion RRC (mesure de l'UE) ou du protocole NBAP (mesure du node B).

Pour un canal i donné, la somme des valeurs propres $\lambda_{i,j}$, déterminées par le module d'analyse 37 pour les p trajets de propagation pris en considération ($1 \leq j \leq p$), représente l'énergie globale reçue sur le canal, ramenée à la durée d'un symbole. Cette énergie est appelée RSCP dans la norme ("Received Signal Code Power"). Le module d'analyse 37 détermine également pour chaque canal i la puissance résiduelle du bruit après prise en compte des p trajets. Cette puissance résiduelle est appelée ISCP dans la norme ("Interference Signal Code Power"). La quantité $(RSCP/ISCP) \times (SF/2)$ représente le rapport signal-sur-interféreurs (SIR, "Signal-to-Interferer Ratio") pour un canal descendant, SF désignant le facteur d'étalement du canal. Le SIR est égal à $(RSCP/ISCP) \times SF$ pour un canal montant.

Le SIR, évalué sur les symboles pilotes transmis sur un canal dédié, est une mesure que le RNC peut demander à l'UE ou au node B, et il peut éventuellement en tenir compte dans la gestion de l'ensemble actif.

Le récepteur radio est en outre capable de mesurer la puissance reçue dans la bande passante des signaux autour d'une porteuse UMTS. Cette puissance, mesurée par un module 42 en amont des filtres adaptés 35, est indiquée par la quantité appelée RSSI ("Received Signal Strength Indicator"). Le RNC 12 peut demander que la mesure RSSI lui soit fournie par l'UE (3G TS 25.331, sections 10.3.7.15 et 10.3.7.21).

Les UE en communication surveillent en parallèle les énergies reçues sur les canaux CPICH des cellules appartenant à un ensemble surveillé ("monitored set") comprenant l'ensemble actif et un certain nombre de cellules avoisinantes. Ces mesures d'énergie sont généralement remontées au RNC dans les messages "MEASUREMENT REPORT". Les grandeurs remontées peuvent être les énergies absolues (CPICH_RSCP) ou, plus couramment, normalisées par rapport à l'énergie du signal reçu (CPICH_Ec/N0 = CPICH_RSCP / RSSI).

Le RNC peut d'autre part se faire communiquer par l'UE les atténuations ("pathloss") dans le sens descendant pour chaque émetteur-récepteur i au moyen des messages "MEASUREMENT CONTROL" et "MEASUREMENT REPORT" du protocole RRC. Ce paramètre d'atténuation, en dB, est la différence entre la puissance d'émission sur le CPICH primaire par l'émetteur-récepteur i et le paramètre CPICH_RSCP mesuré par l'UE (3G TS 25.331, section 10.3.7.38). Il peut aussi être exprimé par le rapport $L_i$ de la puissance reçue à la puissance émise en watts ($L_i \leq 1$).

Dans la suite, on suppose que le RNC dispose, pour un canal dédié descendant:

- des rapports d'atténuation $L_i$ correspondant aux "pathloss" remontés par l'UE relativement aux cellules de l'ensemble actif;
- de la puissance N0 du bruit subi par l'UE en réception. En première approximation, N0 peut être pris égal à RSSI. Une estimation plus fine peut être obtenue par le RNC selon

$$N0 = RSSI - \sum_i p_i . L_i \ ,$$

où $p_i$ est la puissance émise sur le canal par la cellule i de l'ensemble actif, que le RNC peut se faire communiquer par le protocole NBAP (3G TS 25.433, sections 9.2.1.23 et 9.2.1.24).

Pour chaque cellule de l'ensemble actif, on note $a_i$ la quantité $a_i = \frac{N0}{L_i}$. Le taux d'erreur binaire (BER) sur la liaison descendante en macrodiversité peut être approché par la relation:

$$BER(\{p_i\}) = \frac{1}{2} \cdot \frac{1}{\prod_i (1 + p_i / a_i)}$$

Une bonne répartition de la puissance entre les cellules de l'ensemble actif s'obtient en essayant de minimiser le BER. En utilisant un multiplieur de Lagrange K en relation avec la contrainte

$$\sum_i p_i = P \ ,$$

où P désigne la puissance totale à émettre vers l'UE, ceci revient à minimiser la fonction coût:

$$J = -\sum_i \log(1 + p_i / a_i) + K.\left( P - \sum_i p_i \right)$$

Les puissances $p_i$ à émettre par les différentes cellules s'obtiennent en annulant les dérivées partielles $\frac{\partial J}{\partial p_i}$, ce qui donne:

$$p_i = (-1/K) - a_i \qquad (1)$$

En sommant les puissances $p_i$ selon (1), on obtient l'égalité

$$\frac{P}{n} = -\frac{1}{K} - \frac{1}{n}\sum_i a_i \, ,$$

de laquelle on déduit:

$$p_i = \frac{P}{n} - a_i + \frac{1}{n}\sum_j a_j \qquad\qquad (2)$$

ou de façon équivalente:

$$p_i = \frac{P}{n} - \left(\frac{n-1}{n}\right)a_i + \frac{1}{n}\sum_{j\neq i} a_j \qquad\qquad (3)$$

pour chaque cellule i de l'ensemble actif, n étant le nombre de cellules de cet ensemble.

Ainsi, connaissant les $a_j$ d'après les mesures remontées par les UE et/ou les nodes B, le RNC peut évaluer les écarts des puissances $p_i$ par rapport à la moyenne P/n, et commander en conséquence les nodes B desservant les cellules de l'ensemble actif.

Une cellule pour laquelle la relation (2) ou (3) donne une puissance $p_i$ négative sera commandée par le RNC pour ne pas émettre à destination de l'UE. En d'autres termes, on prend $p_i = 0$ si:

$$a_i > \frac{1}{n}\left(P + \sum_j a_j\right) \qquad\qquad (4)$$

ou de façon équivalente:

$$a_i > \frac{1}{n-1}\left(P + \sum_{j\neq i} a_j\right) \qquad\qquad (5)$$

Si m cellules de l'ensemble actif vérifient la condition (4), avec m $\geq 1$, on les écarte de l'ensemble actif et on réitère le calcul (2) en remplaçant n par n-m. Cette circonstance ne se produira normalement pas souvent parce que les algorithmes de définition de l'ensemble actif sont adaptés pour ne retenir que des cellules offrant des conditions de propagation relativement bonnes, c'est-à-dire un pathloss pas trop fort ($a_i$ relativement faible).

Le test de la condition (4) peut aussi servir dans les algorithmes de définition de l'ensemble actif. La quantité

$$\frac{P}{n} - a_i + \frac{1}{n}\sum_i a_j$$

est adressée comme paramètre à la procédure de détermination de l'ensemble actif. Le RNC exécutant cette procédure peut notamment éliminer de l'ensemble actif une cellule une cellule i pour laquelle l'inégalité (4) serait vérifiée N fois de suite, N étant un paramètre entier constant (par exemple N = 1) ou réglable. Une autre possibilité est d'éliminer une cellule i qui vérifie l'inégalité avec une certaine marge M:

$$a_i > \frac{1}{n}\left(P + \sum_j a_j\right) + M \quad \text{ou} \quad a_i > \frac{1}{n-1}\left(P + \sum_{j \neq i} a_j\right) + M.$$

La formule (2) ou (3) est exploitée par le RNC pour régler la puissance d'émission des émetteurs-récepteurs de l'ensemble actif vis-à-vis d'un terminal mobile en macrodiversité.

Comme décrit dans la section 5.2 de la spécification technique TS 25.214, "Physical Layer procédures (FDD)", version 3.6.0, publiée par le 3GPP en mars 2001, la puissance émise sur le canal dédié par un émetteur-récepteur de l'ensemble actif lors de la k-ième tranche temporelle de 666 $\mu$s est asservie par la boucle interne de contrôle de puissance selon:

$$p_i(k) = p_i(k\text{-}1) + p_{TPC}(k) + p_{bal}(k) \tag{6}$$

où $p_{TPC}(k) = \pm \Delta_{TPC}$ selon les bits TPC reçus de l'UE. Le terme correctif $p_{bal}(k)$ est déterminé à partir d'une puissance de référence $p_{ref}$ communiquée au node B par le RNC dans un message DL POWER CONTROL REQUEST du protocole NBAP (3G TS 25.433, section 8.3.7). Sur les tranches temporelles k d'une période d'ajustement, le node B prend:

$$\sum_k p_{bal}(k) = (1-r) \cdot (p_{ref} + p_{P\text{-}CPICH} - p_{init}) \tag{7}$$

La durée de la période d'ajustement (une ou plusieurs trames de 10 ms) et le coefficient d'ajustement r sont aussi spécifiés par le RNC dans le message DL POWER CONTROL REQUEST. La quantité $p_{P\text{-}CPICH}$ représente la puissance d'émission sur le canal CPICH primaire de la cellule, par rapport à laquelle est exprimée $p_{ref}$, et $p_{init}$ représente la puissance d'émission sur le canal dédié au cours de la dernière tranche temporelle de la période d'ajustement précédente.

Habituellement, la puissance est répartie de façon équilibrée entre les émetteurs-récepteurs de l'ensemble actif, c'est-à-dire qu'on prend des valeurs de $p_{ref}$ correspondant toutes à la puissance moyenne P/n. Après convergence du processus (7) d'équilibrage de puissance ($p_{bal}(k) \approx 0$), la puissance émise $p_i(k)$ fluctue selon les bits TPC autour d'une valeur qui est d'abord approximativement égale à $p_{ref} + p_{P\text{-}CPICH}$ puis qui évolue en fonction de la boucle externe de contrôle de puissance. Cette boucle externe règle de façon relativement lente une valeur cible $SIR_{target}$ pour le SIR observé par l'UE en fonction de la qualité de réception en termes de taux de blocs erronés (BLER). La boucle interne génère quant à elle des bits TPC déterminés pour tendre à aligner le SIR observé sur la cible $SIR_{target}$. Lorsque la boucle externe fait évoluer la puissance totale émise, le terme d'équilibrage $p_{bal}(k)$ résultant de (7) fait légèrement dériver la puissance émise selon (6), mais les bits TPC compensent rapidement cette dérive. L'ensemble du processus asservit la puissance émise en respectant la condition d'équilibrage, en évitant aussi que d'éventuelles erreurs de réception des bits TPC par certains nodes B perturbent cet équilibrage.

La puissance totale à émettre P peut être déterminée de diverses manières. A l'établissement du canal, il n'y a normalement qu'une cellule dans l'ensemble actif. Le node B correspondant peut commencer à émettre avec une puissance arbitraire, par exemple au milieu d'une plage de puissance qui lui est assignée. Une autre possibilité est que le RNC lui indique la puissance initiale à employer, déterminée en fonction d'une valeur cible, dépendant du service requis, pour le rapport de l'énergie par bit au bruit (Eb/N0). Ensuite, les boucles interne et externe font rapidement converger la puissance vers une valeur appropriée. Lorsqu'une n-ième cellule est ajoutée à l'ensemble actif (n $\geq$2), le RNC questionne les nodes B des n-1 autres cellules par le protocole NBAP pour connaître les puissances avec lesquelles ils sont en train d'émettre (sur une période de quelques trames par exemple) sur le code alloué au canal. La somme des puissances ainsi obtenues constitue alors la valeur de P pour les calculs (2)-(5). Le RNC peut aussi faire évoluer le terme P en parallèle avec les évolutions de la consigne $SIR_{target}$ résultant de la boucle externe de contrôle de puissance.

Après élimination éventuelle de chaque cellule qui vérifierait (4) ou (5), chaque puissance $p_i$ résultant de (2), exprimée relativement à $p_{P\text{-}CPICH}$, est affectée par le RNC au paramètre $p_{ref}$ fourni à l'émetteur correspondant dans un message DL POWER CONTROL REQUEST. Les processus (6) et (7) assurent que les écarts relatifs entre les puissances émises restent gouvernés par les écarts fixés entre les valeurs de $p_{ref}$, soit compte tenu de (2):

$$p_i - p_j \approx a_j - a_i = N0 \cdot \left( \frac{1}{L_j} - \frac{1}{L_i} \right)$$

Le test (4) et le calcul des puissances (2) sont appliqués par le RNC pour chaque UE ayant une communication en cours avec plusieurs cellules, avec une périodicité qui est par exemple de l'ordre de quelques secondes. Chaque fois, le RNC récupère à l'aide du protocole RRC les paramètres N0 et $L_i$ et actualise éventuellement la valeur de P. Les paramètres $p_{ref}$ sont ensuite distribués aux nodes B concernés. Ceci permet d'optimiser le BER sur l'ensemble des liens radio actifs en macrodiversité.

**Revendications**

1.  Procédé de contrôle de puissance relative de signaux radio émis en mode macrodiversité depuis plusieurs émetteurs radio (13) d'un ensemble actif vers un terminal radio (14a, 14b), comprenant les étapes suivantes:

    -  estimer des rapports d'atténuation respectifs de signaux radio reçus par le terminal depuis les émetteurs de l'ensemble actif; et
    -  commander certains au moins des émetteurs de l'ensemble actif pour qu'ils émettent à destination du terminal avec des puissances respectives telles que l'écart $p_i - p_j$ entre les puissances d'émission respectives $p_i$ et $p_j$ de deux émetteurs i et j soit sensiblement proportionnel à $\frac{1}{L_j} - \frac{1}{L_i}$, où $L_i$ et $L_j$ désignent les rapports d'atténuation respectivement estimés pour les émetteurs i et j.

2.  Procédé selon la revendication 1, dans lequel lesdits émetteurs i et j sont commandés de façon que l'écart $p_i - p_j$ entre leurs puissances d'émission respectives soit sensiblement égal à

$$N0 \cdot \left( \frac{1}{L_j} - \frac{1}{L_i} \right),$$

où N0 est une estimation de la puissance du bruit subi en réception par le terminal radio (14a, 14b).

3.  Procédé selon la revendication 2, dans lequel on estime une puissance totale P à émettre vers le terminal (14a, 14b) depuis les émetteurs (13) de l'ensemble, on évalue le signe de la quantité

$$\frac{P}{n} - a_i + \frac{1}{n} \sum_j a_j$$

pour chaque émetteur i de l'ensemble actif, où n est le nombre d'émetteurs de l'ensemble actif et pour chaque émetteur j de l'ensemble actif $a_j = \frac{N0}{L_j}$, et lorsque le signe évalué est négatif, on commande l'émetteur i pour qu'il n'émette pas à destination du terminal.

4.  Procédé selon la revendication 3, dans lequel la quantité

$$\frac{P}{n} - a_i + \frac{1}{n} \sum_j a_j$$

est fournie comme paramètre d'un processus de décision de maintien ou d'élimination de l'émetteur i dans l'ensemble actif.

5. Procédé selon l'une quelconque des revendications précédentes, dans lequel les étapes d'estimation des rapports d'atténuation et de commande des émetteurs de l'ensemble actif sont exécutées périodiquement.

6. Contrôleur de réseau radio pour une infrastructure de réseau radio cellulaire, comprenant des moyens (51-52) de communication avec des émetteurs radio fixes (13) desservant des cellules respectives et avec au moins un terminal radio (14, 14a, 14b), et des moyens (15A) de contrôle de ressources radio affectées à une communication entre le terminal et plusieurs des émetteurs radio appartenant à un ensemble actif, dans lequel les moyens de contrôle de ressources radio comprennent des moyens pour estimer des rapports d'atténuation respectifs de signaux radio reçus par le terminal depuis les émetteurs de l'ensemble actif d'après des mesures relatives à des conditions de réception desdits signaux radio par le terminal, et des moyens pour commander certains au moins des émetteurs de l'ensemble actif pour qu'ils émettent à destination du terminal avec des puissances respectives telles que l'écart $p_i - p_j$ entre les puissances d'émission respectives $p_i$ et $p_j$ de deux émetteurs i et j soit sensiblement proportionnel à $\frac{1}{L_j} - \frac{1}{L_i}$, où $L_i$ et $L_j$ désignent les rapports d'atténuation respectivement estimés pour les émetteurs i et j.

7. Contrôleur de réseau radio selon la revendication 6, dans lequel lesdits émetteurs i et j sont commandés de façon que l'écart $p_i - p_j$ entre leurs puissances d'émission respectives soit sensiblement égal à

$$N0.\left(\frac{1}{L_j} - \frac{1}{L_i}\right),$$

où N0 est une estimation de la puissance du bruit subi en réception par le terminal radio (14a, 14b).

8. Contrôleur de réseau radio selon la revendication 7, dans lequel les moyens de contrôle de ressources radio comprennent des moyens pour estimer une puissance totale P à émettre vers le terminal (14a, 14b) depuis les émetteurs (13) de l'ensemble, et des moyens pour évaluer le signe de la quantité

$$\frac{P}{n} - a_i + \frac{1}{n}\sum_j a_j$$

pour chaque émetteur i de l'ensemble actif, où n est le nombre d'émetteurs de l'ensemble actif et pour chaque émetteur j de l'ensemble actif $a_j = \frac{N0}{L_j}$, l'émetteur i étant commandé pour ne pas émettre à destination du terminal lorsque le signe évalué est négatif.

9. Contrôleur de réseau radio selon la revendication 8, dans lequel les moyens de contrôle de ressources radio comprennent des moyens de détermination de l'ensemble actif, recevant comme paramètre la quantité

$$\frac{P}{n} - a_i + \frac{1}{n}\sum_j a_j$$

afin d'éliminer de l'ensemble actif un émetteur pour lequel ladite quantité est négative.

FIG.1.

RÉSEAU FIXE

11

10 COMMUTATEUR UMTS

10 COMMUTATEUR UMTS

Iu

Iu

Iu

12 RNC

Iur

RNC

Iur

RNC

12

12

Iub

Iub

Iub

9 NODE B

NODE B

NODE B

NODE B

NODE B

NODE B

NODE B

NODE B

9

13

13

13

13

14

14a

14b

EP 1 492 250 A1

FIG.2.

FIG.3.

FIG.4.

FIG.5.

ÉTAGE RADIO 31

32

CAN 33 I
CAN 33 Q

34
34

RSSI 42

FILTRES ADAPTÉS 35

$\{c_i\}$

SÉPARATION DONNÉES PILOTE 36

DOIGTS RAKE 38

$\{v_{i,j}\}$

$\{a_{i,j}\}$

ANALYSE CANAUX 37

$\{\lambda_{i,j}\}$

$\{ISCP_i\}$

MESURES 41

Σ 39

CONTRÔLE 40

FIG.6.

**Office européen des brevets**

# RAPPORT DE RECHERCHE EUROPEENNE

Numéro de la demande

EP 04 01 3359

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 2 358 109 A (FUJITSU LTD) 11 juillet 2001 (2001-07-11) * page 10, ligne 32 - page 13, ligne 18 * * page 14, ligne 16 - page 15, ligne 26 * * figure 6 * | 1-9 | H04B7/005 |
| A | US 5 978 657 A (SUZUKI MITSUHIRO) 2 novembre 1999 (1999-11-02) * abrégé * * colonne 7, ligne 29 - colonne 8, ligne 28 * * figure 3 * | 1,6 | |
| A | WO 02/102109 A (MATSUSHITA ELECTRIC IND CO LTD (JP)) 19 décembre 2002 (2002-12-19) & US 2003/171118 A1 (KAZUYUKI MIYA, KAWASAKI-SHI (JP)) 11 septembre 2003 (2003-09-11) * page 5, alinéas 71,72 * * revendications 1,7,9,10 * | 1,6 | |
| A | EP 0 949 768 A (NOKIA MOBILE PHONES LTD) 13 octobre 1999 (1999-10-13) * alinéas [0029] - [0031] * * revendication 11 * * figure 3 * | 1,6 | DOMAINES TECHNIQUES RECHERCHES (Int.Cl.7) H04B H04Q |

Le présent rapport a été établi pour toutes les revendications

| Lieu de la recherche | Date d'achèvement de la recherche | Examinateur |
|---|---|---|
| La Haye | 15 septembre 2004 | Yang, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**
EP 04 01 3359

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.
15-09-2004

| Document brevet cité au rapport de recherche | | Date de publication | Membre(s) de la famille de brevet(s) | | Date de publication |
|---|---|---|---|---|---|
| GB 2358109 | A | 11-07-2001 | AUCUN | | |
| US 5978657 | A | 02-11-1999 | JP | 8256102 A | 01-10-1996 |
| WO 02102109 | A | 19-12-2002 | CN | 1465203 T | 31-12-2003 |
| | | | EP | 1395075 A1 | 03-03-2004 |
| | | | WO | 02102109 A1 | 19-12-2002 |
| | | | US | 2003171118 A1 | 11-09-2003 |
| US 2003171118 | A1 | 11-09-2003 | CN | 1465203 T | 31-12-2003 |
| | | | EP | 1395075 A1 | 03-03-2004 |
| | | | WO | 02102109 A1 | 19-12-2002 |
| EP 0949768 | A | 13-10-1999 | FI | 980809 A | 09-10-1999 |
| | | | FI | 981194 A | 29-11-1999 |
| | | | AU | 3422499 A | 01-11-1999 |
| | | | BR | 9901046 A | 04-01-2000 |
| | | | CN | 1235496 A | 17-11-1999 |
| | | | DE | 69913232 D1 | 15-01-2004 |
| | | | EP | 0949768 A2 | 13-10-1999 |
| | | | ES | 2212468 T3 | 16-07-2004 |
| | | | WO | 9953629 A2 | 21-10-1999 |
| | | | JP | 11331072 A | 30-11-1999 |
| | | | RU | 2222117 C2 | 20-01-2004 |
| | | | US | 2003099209 A1 | 29-05-2003 |

EPO FORM P0460